(19)

Europäisches
Patentamt
European
Patent Office
Office européen
des brevets

(11) **EP 2 048 901 A1**

(12) **EUROPEAN PATENT APPLICATION**

(43) Date of publication:
**15.04.2009 Bulletin 2009/16**

(51) Int Cl.:
***H04W 16/00*** (2009.01)

(21) Application number: **07019649.8**

(22) Date of filing: **08.10.2007**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK RS**

(71) Applicant: **Nokia Siemens Networks Oy
02610 Espoo (FI)**

(72) Inventors:
• **Breuer, Volker, Dr.
16727 Bötzow (DE)**
• **Vesely, Alexander
8330 Feldbach (AT)**

(74) Representative: **Bruglachner, Thomas E.
Nokia Siemens Networks GmbH & Co. KG
Patentabteilung
Postfach 80 17 60
81617 München (DE)**

(54) **Method and device for selecting a scrambling code and communication system comprising
such device**

(57)     A method and a device are provided for selecting
a scrambling code comprising the step of (a) select the
scrambling code according to a rule set at a home base
station. Further, a communication system comprising
such a device is provided.

# Fig.1

EP 2 048 901 A1

## Description

The invention relates to a method and to a device for selecting a scrambling code and to a communication system comprising such a device.

For 3GPP Release 8, a home NodeB (also referred to herein as home base station or "HNB") is subject to evaluation in particular within the context of 3.5G (HSPA/WCDMA) ("3.5G HNB") and LTE ("LTE HNB").

The HNB is considered to be an end-user type of equipment and to a certain extent self-installation/organization functionality is required and/or advantageous for such a device, in contrast to coordinated operator network-planning for macro-deployments.

HNB deployment scenarios may have to rely on automatic installation and failure recovery procedures. In this regard, in particular the 3.5G HNB is considered. However, this issue may also apply to LTE and various kinds of home base stations in different scenarios.

To separate different cells on the same carrier in Wideband Code Division Multiple Access (WCDMA) and/or High Speed Packet Access (HSPA) a scrambling code is used. In downlink (DL) in total 512 possibilities are available for distinction. Preferably, primary codes are used in real deployments due to poor orthogonality of secondary scrambling codes. Hence, an operator has sufficient possibilities or freedom to provide a careful planning that avoids that adjacent base stations employ the same scrambling code. In addition, the total number of scrambling codes available provides space for future updates, in particular for installing additional nodes (base stations) in between existing nodes without impairment of the overall system.

Regarding the home base station (HNB), no such installation is done. Setting up the HNB implies the risk that an adjacent node (e.g., HNB or base station) is already running with the scrambling code intended to be used.

This risk of utilizing a scrambling code that is already employed by an adjacent node increases as the overall number of scrambling codes to be used for HNBs may be restricted to a subset of the overall available scrambling codes.

Regarding UMTS mobility, the scrambling code is one of the information provided in a neighbor cell list, given that this cell list is restricted to 32 entries only to cope also with macro inter-frequency mobility.

A small number of scrambling codes (e.g., in an order of about 20) may be reserved for HNB purposes. Hence, each of these scrambling codes that is reserved for a particular HNB may potentially be used by several other HNBs, which would be no problem as long as the HNBs using the same scrambling code are sufficiently away from one another. On the other hand, the likelihood of two adjacent or interfering HNBs trying to use the same scrambling code is considerably high.

The similar problem exists regarding a particular HNB within the macro cell (associated with a base station): The scrambling code of the HNB and that of the macro cell (i.e. the base station running the macro cell) must not be the same.

It is to be noted that there may be scenarios in dense areas deploying up to 500 HNBs per macro cell.

It is another consideration of this scenario that HNBs may not be active all the time. They may be temporarily switched off (e.g., during holiday season) and turned on again after some time lapsed. Hence, during this time another HNB may have been deployed in the vicinity of this previous HNB using the same scrambling code. This would lead to a collision of scrambling codes if the previous HNB is switched on again.

The **problem** to be solved is to overcome the disadvantages as set forth above and to allow a flexible and dynamic deployment of home base stations within a macro cell.

This problem is solved according to the features of the independent claims. Further embodiments result from the depending claims.

In order to overcome this problem, a method is provided for selecting a scrambling code comprising the step:

(a) select the scrambling code according to a rule set at a home base station.

This allows that a scrambling code may be selected according to a rule or algorithm run at a network element, in particular run on a home base station, e.g., a Home NodeB (HNB), or on a mobile terminal, e.g., a User Equipment (UE). Hence, the scrambling code chosen may vary and it may in particular be efficiently chosen as a result to external effects as, e.g., interference with another (home) base station.

In an embodiment, the home base station is a Home NodeB (HNB).

In another embodiment, the scrambling code is selected out of a set or a subset of scrambling codes.

The rule set forth may just step through a list of pre-selected scrambling codes that may be used for this particular home base station or for a number of home base stations that may be located within a cluster of a macro cell.

In particular, the order or the steps as how to process such a subset of pre-selected scrambling codes, may be set forth by said rule.

In a further embodiment, said rule comprises and/or is associated with at least a predefined rule and/or a predefined algorithm.

Hence, the rule may be defined to dynamically determine a scrambling code to be chosen according to at least one parameter (preferably relating to an identity information of the home base station). Alternatively, the rule may choose the scrambling code, e.g., by selecting the next scrambling code of several pre-defined scrambling codes.

In a next embodiment, said rule comprises and/or is associated with at least a selection of scrambling codes.

Such selection may be used for a number of home base stations within a macro cell. In other words, such home base stations may have to share this selection of scrambling codes.

It is also an embodiment that said rule comprises and/or is associated with a property of the home base station, in particular an information associated with an identity of the home base station.

An identity or a unique information of the home base station can be utilized in order to efficiently determine the (next) scrambling code.

Pursuant to another embodiment, said property of the home base station comprises a serial number of the home base station.

According to an embodiment, the method comprises the steps:

(b) check whether the scrambling code selected can be used;
(c) if the scrambling code cannot be used, another scrambling code is selected according to said rule and it is branched to step (b).

According to another embodiment, prior to step (a) a startup of the home base station is conducted.

In yet another embodiment, the scrambling code selected cannot be used in case it is already in use in particular by another home base station or by another base station. Also, the another scrambling code may be determined by utilization of a modulo operator. In particular the another scrambling code may be determined by selecting a subsequent scrambling code of a set of scrambling codes.

According to a next embodiment a signaling from the home base station to its users conveys identity information of the home base station. Such signaling may comprise a serial number of the home base station. As an option, the identity information may be conveyed during or in association with a first contact between the home base station and one of its users. In this regard, each user may be a mobile terminal, in particular a User Equipment (UE).

Pursuant to yet an embodiment, the method may be run on a home base station and/or on a terminal, in particular on a mobile terminal (UE).

The problem is also solved by a device for selecting a scrambling code comprising a processor unit that is arranged such that the method as described is executable on said processor unit.

According to an embodiment, said device is a communication device, in particular a home base station or a Home NodeB.

According to another embodiment, said device is a communication device, in particular a mobile terminal.

Further, the problem as stated above is also solved by a communication system comprising the device as described herein.

Embodiments of the invention are shown and illustrated in the following figures:

Fig.1    shows steps of a method for selecting a scrambling code;

Fig.2    shows a scenario comprising an area of a macro cell, wherein several home base stations (or HNBs) are located within said macro cell;

Fig.3    shows a communication diagram between a UE and a HNB in particular during or in relation to a startup-phase.

Herewith, in particular a decentralized scrambling code detection and resolving process is suggested for a home base station (or Home NodeB, HNB).

The macro cell comprises a service area wherein several HNBs are deployed. This macro cell does neither require any information on an actual HNB network topology nor is it in general desirable to provide such administration of scrambling codes to HNBs within a macro cell in a centralized manner.

In case of scrambling code "clashes", i.e., if the HNB detects at startup that the scrambling code that it intends to use (the same the HNB may be used previously, maybe before the HNB was switched off) is already in use and hence occupied by another HNB or by a base station (BS) in the proximity. The HNB shall use a different scrambling code instead.

This different scrambling codes may be chosen from a set of scrambling codes that are assigned to or allowed for HNBs within the macro cell.

As an alternative or in addition, the actual scrambling code that is to be selected can be calculated by various kinds of algorithms. As an example, such an algorithm may depend on some property or special characteristic of the HNB that may be associated with a particular information relating to an identity of the individual HNB.

This approach may in particular provide the following advantages:

a) In case of parallel scrambling code reconfigurations of adjacent network nodes (base stations and/or home base stations) no endless loops occur that may impair, in particular block the system.

b) If the scrambling code change is conducted according to a particular rule comprising or associated with some property (identity) of the HNB, such change (due to the rule) could also be made transparent (i.e., "understandable") to a UE that is trying to get connected to its HNB (i.e., the HNB to which the particular UE is associated with).

For example, the UE may know that its HNB should be in the area of which the UE itself is currently located, but the UE does not detect the scrambling code previously used by its HNB. Thus, the UE may be able to search for the "modified" scrambling code utilizing the rule and/or the physical property/identity according to which the current HNB scrambling code has been selected.

For example, similar as each mobile phone also each HNB may comprise a serial number that can be used to shift and/or select a subsequent scrambling code (e.g., out of a (sub-)set of scrambling codes) in order to find the next available scrambling code being

$$modulo\ X\ (HNB\ ID)$$

away from the actual scrambling code. In case that clash resolving fails with this subsequent scrambling code, the value to address a next scrambling code may be 2X.

It may in particular be useful to provide a transparency to the UE as how the HNB finds the next free scrambling code, i.e., as how the rule to find the next scrambling code available is implemented. The UE is enabled to find the scrambling code chosen by the HNB in a fast and efficient way (alternatively, the UE may scan all scrambling codes, e.g., of a sub-set, to find its associated HNB) and hence to be allowed access to the HNB domain.

Advantageously, a signaling from the HNB to its users, in particular to its registered users may provide the identity information, e.g., the serial number, of the HNB to at least one UE. This can be done during first contact between the respective UE and the HNB.

As an alternative or in addition, an identity information of the HNB, e.g., a CSG-area-Id could be used.

A further evolution of LTE may use a different numbering scheme for reference signals, but may apply the principle of the approach described herein.

In Long Term Evolution (LTE), in particular for non-MBSFN (Multicast Broadcast Single Frequency Network) transmission, cell-specific reference signals may be transmitted in downlink sub-frames. This reference signals are generated as a symbol-by-symbol product of a 2-dimensional orthogonal sequence (NOS=3) and a 2-dimensional pseudo-random sequence (NPRS=170). In sum, a 510 different cell specific reference signal can be distinguished and serve as a physical-layer cell-identity as the primary scrambling code does for WCDMA.

The same mechanisms may apply for the autonomous selection of an cell-specific reference signal according to this approach for the selection of the primary scrambling code.

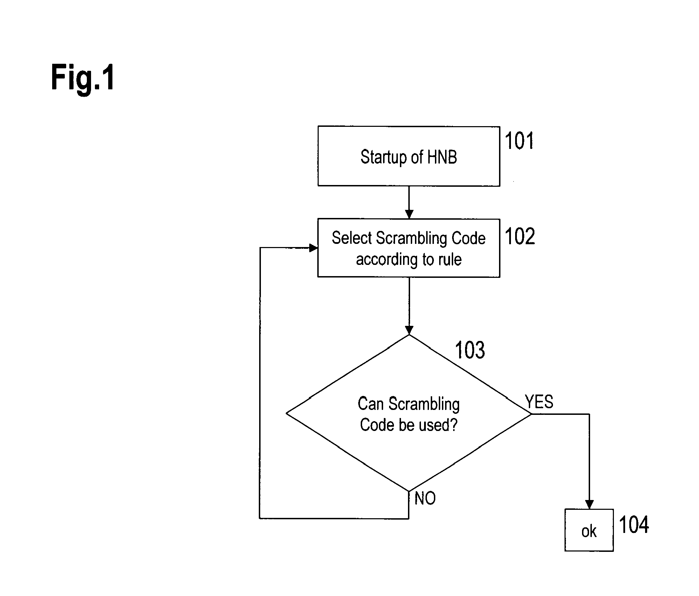

**Fig.1** shows steps of a method for selecting a scrambling code. In a step 101 a startup of a HNB is conducted and in a step 102 the HNB selects a scrambling code according to a rule and/or algorithm as described. In a step 103 it is checked whether or not the scrambling code selected can be used. Due to interference with the same scrambling code already selected by a base station or a home base station in the vicinity, such scrambling code may not be used by the HNB. In such case it is branched to step 102. If the scrambling code selected can be used it is branched to a step 104 indicating that this scrambling code becomes the active one.

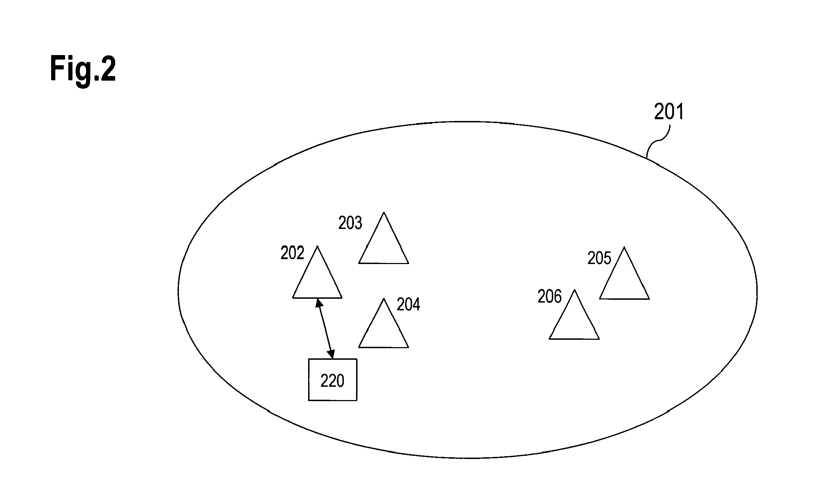

Fig.2 shows a scenario comprising an area of a macro cell 201, wherein several home base stations (or HNBs) 202 to 205 are located within said macro cell 201.

As an example, a UE 220 is associated to a particular home base station 202.

Assuming that the home base stations 202 to 204 are in a first sub-area of the macro cell 201 and the home base stations 205 and 206 are in a second sub-area of the macro cell 201, the home base stations 202 to 204 may have each to use a scrambling code that varies from the scrambling codes used by the other home base stations in the same sub-area. The same applies to home base stations 205 and 206.

However, in case the first sub-area and the second sub-area are not in the proximity to one another, the scrambling codes used in both sub-areas may not interfere with each other. As a consequence, the home base stations within a sub-area need to use different scrambling codes, whereas the scrambling codes utilized within the sub-areas may be the same.

It is, however, important that the scrambling codes used in each sub-area differ from the scrambling code used by the base station for the macro cell 201.

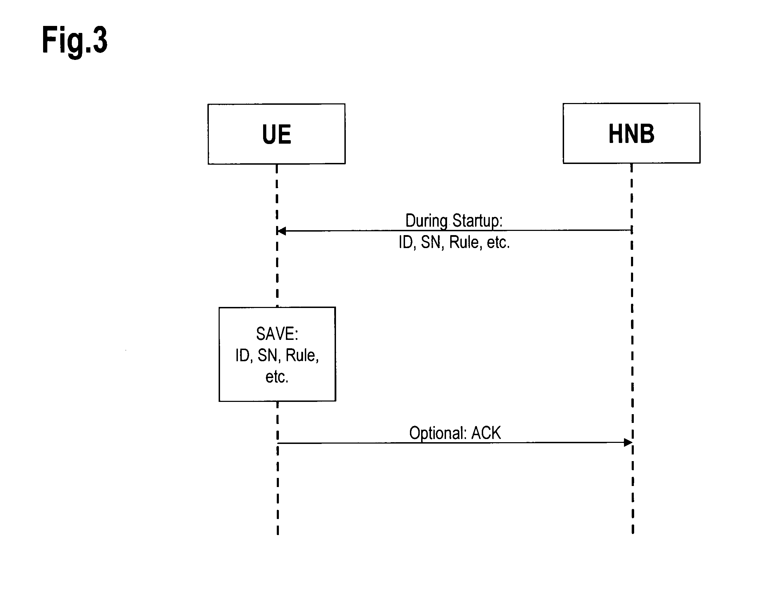

Fig.3 shows a communication diagram between a UE and a HNB (preferably the HNB that is associated to the UE or vice versa) in particular during or in relation to a startup-phase.

The HNB sends in particular one of the following information towards the UE: An identity information ID, a serial number SN, a rule (or algorithm) as how to select a scrambling code.

This information may be stored at the UE for actual and/or further usage. For example, after a restart of the HNB the UE may be able to quickly find the scrambling code selected by the HNB according to, e.g., the rule and/or identity information provided.

The UE may send an acknowledgement ACK to the UE in return.

Further Advantages:

The automatic avoidance of scrambling code collision is one particular advantage provided regarding HNB deployments in general and in particular for carrier shared HNB/WA scenarios. Otherwise, uncoordinated deployments would not be feasible.

In particular, the transparency of the rule as how to select the scrambling code is a beneficial feature provided with this approach.

Furthermore, considering an identity (ID) of the HNB efficiently avoids interference of scrambling codes in particular as the ID is an individual number for each HNB which may inflict individual behavior in case of a clash of scrambling codes.

**Abbreviations:**

| | |
|---|---|
| 3GPP | Third Generation Partnership Project |
| CDMA | Code Division Multiple Access |
| DL | Downlink |
| HNB | Home NodeB |
| HSPA | High Speed Packet Access |
| LTE | Long Term Evolution |
| MBSFN | Multicast Broadcast Single Frequency Network |
| UE | User Equipment |
| UL | Uplink |
| UMTS | Universal Mobile Telecommunications System |
| WCDMA | Wideband CDMA |

**Claims**

1. A method for selecting a scrambling code comprising the step:

   (a) select the scrambling code according to a rule set at a home base station.

2. The method according to claim 1, wherein the home base station is a Home NodeB.

3. The method according to any of the preceding claims, wherein the scrambling code is selected out of a set or a subset of scrambling codes.

4. The method according to any of the preceding claims, wherein said rule comprises and/or is associated with at least a predefined rule and/or a predefined algorithm.

5. The method according to any of the preceding claims, wherein said rule comprises and/or is associated with at least a selection of scrambling codes.

6. The method according to any of the preceding claims, wherein said rule comprises and/or is associated with a property of the home base station, in particular an information associated with an identity of the home base station.

7. The method according to claim 6, wherein said property of the home base station comprises a serial number of the home base station.

8. The method according to any of the preceding claims comprising the steps:

   (b) check whether the scrambling code selected can be used;
   (c) if the scrambling code cannot be used, another scrambling code is selected according to said rule and it is branched to step (b).

9. The method according to claim 8, wherein prior to step (a) a startup of the home base station is conducted.

10. The method according to any of the claims 8 or 9, wherein the scrambling code selected cannot be used if it is already in use in particular by another home base station or by another base station.

11. The method according to any of claims 8 to 10, wherein the another scrambling code is determined by utilization of a modulo operator.

12. The method according to any of claims 8 to 11, wherein the another scrambling code is determined by selecting a subsequent scrambling code of a set of scrambling codes.

13. The method according to any of the preceding claims, wherein a signaling from the home base station to its users conveys identity information of the home base station.

14. The method according to claim 13, wherein the signaling comprises a serial number of the home base station.

15. The method according to any of claims 13 or 14, wherein the identity information is conveyed during or in association with a first contact between the home base station and one of its users.

16. The method according to any of claims 13 to 15, wherein each user is a mobile terminal, in particular a User Equipment.

17. The method according to any of the preceding claims run on a home base station.

18. The method according to any of claims 1 to 16 run on a terminal, in particular a mobile terminal.

19. A device for selecting a scrambling code comprising a processor unit that is arranged such that the method according of any of claims 1 to 18 is executable on said processor unit.

**20.** The device according to claim 19, wherein said device is a communication device, in particular a home base station or a Home NodeB.

**21.** The device according to claim 19, wherein said device is a communication device, in particular a mobile terminal.

**22.** Communication system comprising the device according to any of claims 19 to 21.

# Fig.1

EP 2 048 901 A1

Fig.2

EP 2 048 901 A1

# Fig.3

UE

HNB

During Startup:
ID, SN, Rule, etc.

SAVE:
ID, SN, Rule,
etc.

Optional: ACK

EP 2 048 901 A1

**European Patent Office**

**EUROPEAN SEARCH REPORT**

Application Number

EP 07 01 9649

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/097939 A1 (NYLANDER TOMAS [SE] ET AL) 3 May 2007 (2007-05-03) <br> * paragraphs [0030], [0031] * <br> * paragraphs [0034] - [0037] * <br> * paragraphs [0054] - [0060] * <br> * paragraphs [0068] - [0078] * <br> * figures 1A-1E,4 * <br> ----- | 1-22 | INV. <br> H04Q7/36 |
| X | US 2007/232313 A1 (HOSONO HIROYUKI [JP] ET AL) 4 October 2007 (2007-10-04) <br> * paragraphs [0007] - [0011] * <br> * paragraphs [0045] - [0047] * <br> * paragraphs [0054] - [0057] * <br> * paragraphs [0069] - [0077] * <br> * paragraphs [0104] - [0106] * <br> * figures 1,4 * <br> ----- | 1-22 | |
| | | | TECHNICAL FIELDS SEARCHED (IPC) <br><br> H04Q |

The present search report has been drawn up for all claims

| Place of search | Date of completion of the search | Examiner |
|---|---|---|
| The Hague | 10 March 2008 | Puiulet, Alexandru |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 01 9649

This annex lists the patent family members relating to the patent documents cited in the above-mentioned European search report.
The members are as contained in the European Patent Office EDP file on
The European Patent Office is in no way liable for these particulars which are merely given for the purpose of information.

10-03-2008

| Patent document cited in search report | | Publication date | Patent family member(s) | | Publication date |
|---|---|---|---|---|---|
| US 2007097939 | A1 | 03-05-2007 | NONE | | |
| US 2007232313 | A1 | 04-10-2007 | CN | 101052193 A | 10-10-2007 |
| | | | EP | 1843618 A2 | 10-10-2007 |
| | | | JP | 2007281682 A | 25-10-2007 |

EPO FORM P0459

For more details about this annex : see Official Journal of the European Patent Office, No. 12/82